# EUROPEAN PATENT SPECIFICATION

(11) **EP 3 166 274 B1**
(45) Date of publication and mention of the grant of the patent: **04.09.2019**
(21) Application number: 14898064.2
(22) Date of filing: 25.09.2014
(51) Int. Cl.: H04L 1/18

(54) **METHOD AND DEVICE FOR CONTROLLING DATA TRANSMISSION**
METHOD AND DEVICE FOR CONTROLLING DATA TRANSMISSION
PROCÉDÉ ET DISPOSITIF DE GESTION DE TRANSMISSION DE DONNÉES

(30) Priority: 21.07.2014 WO PCT/CN2014/082630
(43) Date of publication of application: 10.05.2017
(73) Proprietor: Huawei Technologies Co., Ltd., Longgang District Shenzhen, Guangdong 518129 (CN)
(72) Inventor: XU, Liang, Shenzhen Guangdong 518129 (CN); XU, Weizhong, Shenzhen Guangdong 518129 (CN)
(74) Representative: Thun, Clemens
(86) International application number: PCT/CN2014/087454
(87) International publication number: WO 2016/011706

(56) References cited:
- EP-A2- 2 080 308
- CN-A- 101 330 721
- CN-A- 101 562 510
- CN-A- 101 651 529
- US-A1- 2003 131 124
- "3rd Generation Partnership Project; Technical Specification Group Radio Access Network; High Speed Downlink Packet Access (HSDPA); Overall description; Stage 2 (Release 11)", 3GPP DRAFT; 25308-B80, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 14 March 2014 (2014-03-14), XP050905720, Retrieved from the Internet: URL:http://www.3gpp.org/ftp/Specs/2014-12/ Rel-11/25_series/ [retrieved on 2014-03-14]
- "Universal Mobile Telecommunications System (UMTS); Medium Access Control (MAC) protocol specification (3GPP TS 25.321 version 11.5.0 Release 11)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. 3GPP RAN 2, no. V11.5.0, 1 January 2014 (2014-01-01), XP014180234,
- "Universal Mobile Telecommunications System (UMTS); Enhanced uplink; Overall description; Stage 2 (3GPP TS 25.319 version 11.9.0 Release 11)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. 3GPP RAN 2, no. V11.9.0, 1 July 2014 (2014-07-01), XP014214703,

## Description

### TECHNICAL FIELD

The present invention relates to the field of communications technologies, and in particular, to a data transmission control method and apparatus, and a base station.

### BACKGROUND

HSDPA (High Speed Downlink Packet Access) is a mobile communications protocol, and the protocol provides a packet data service in a WCDMA (Wideband Code Division Multiple Access) downlink and is an important new feature of the third generation wireless communications standard WCDMA. A basic idea of the protocol is to establish a high speed shared transmission channel to improve a data transmission rate, thereby providing a maximum downlink throughput rate for a system.

For example, US 2003/0131124A1 refers to a transmitter transmitting Data Blocks each composed of one or more data units originated from a same logical channel, and a receiver receives the Data Block through a HS-DSCH and distributes the Data Block to a predetermined reordering buffer. Since each Data Block is composed of the MAC-d PDUs originated from the same logical channel, it is possible to monitor the in-sequence delivery of the data units, resulting in reduction of undesirable queuing delay caused by logical channel multiplexing.

Further, "3^{rd} Generation Partnership Project; Technical Specification Group Radio Access Network; High Speed Downlink Packet Access (HSDPA); Overall description; Stage 2 (Release 11)", 3GPP draft; 25308-B80, 3^{RD} Generation Partnership Project (3GPP), Mobile Competence Center refers to a technical specification of the overall support of High Speed Downlink Packet Access in UTRA.

As a key technology of the HSDPA, SRB (Signaling Radio Bearers, signaling radio bearer) Over HSDPA can improve a downlink capacity of a future wireless air interface. In LTE (Long Term Evolution, Long Term Evolution), as a special radio bearer (RB), an SRB can be used to transmit an RRC (Radio Resource Control, radio resource control) message and a NAS (Non-Access Stratum) message, so that a network side can send data to user equipment that can perform normal receiving, to complete interaction, so as to ensure that the user equipment and the network side are kept connected.

However, because the 3GPP (3rd Generation Partnership Project, 3rd Generation Partnership Project) protocol specifies that the HSDPA can use only hard handover to complete session handover of the user equipment, which causes an extremely high call drop rate in a cell edge area and an extremely small capacity of a cell coverage edge.

### SUMMARY

Embodiments of the present invention provide a data transmission control method and apparatus, and a base station, which can improve a data receiving success rate of a cell edge, thereby improving a network coverage effect.

To achieve the foregoing objective, the following technical solutions are adopted in the embodiments of the present invention:
In a first aspect a data transmission control method performed by a data transmission control apparatus is provided, the method comprising:
**a.)** acquiring a retransmission identification parameter of a user equipment;
**b.)** determining, according to the retransmission identification parameter, whether the user equipment can identify retransmitted data that belongs to a same hybrid automatic repeat request, HARQ, process as initially transmitted data and that is in a rated transmission interval following receiving of the initially transmitted data; and
**c.)** if yes in step **b.),** sending within the rated transmission interval after the initial transmission, the retransmitted data to the user equipment for at least once by using the HARQ process that is the same as the HARQ process in which the initially transmitted data is located;
**d.)** if no in step **b.),** sending within the rated transmission interval after the initial transmission, the initially transmitted data for at least once by using another HARQ process that is different from the HARQ process in which the initially transmitted data is located.

In a first implementation manner of the first aspect the retransmission identification parameter is identification information of a retransmission identification capability, the acquiring the retransmission identification parameter of user equipment comprises:
acquiring identification information of the retransmission identification capability of the user equipment, wherein the identification information of the retransmission identification capability is used to indicate whether the user equipment can identify the retransmitted data that belongs to the same HARQ process as the initially transmitted data and that is in the rated transmission interval following the receiving of the initially transmitted data; and
the determining, according to the retransmission identification parameter, whether the user equipment can identify retransmitted data that belongs to the same HARQ process as initially transmitted data and that is in the rated transmission interval following receiving of the initially transmitted data comprises:
   if the identification information of the retransmission identification capability indicates that the user equipment can identify the retransmitted data that belongs to the same HARQ process as the initially transmitted data and that is in the rated transmission interval following the receiving of the initially transmitted data, determining that the user equipment can identify the retransmitted data that belongs to the same HARQ process as the initially transmitted data and that is in the rated transmission interval following the receiving of the initially transmitted data; or
   if the identification information of the retransmission identification capability indicates that the user equipment cannot identify the retransmitted data that belongs to the same HARQ process as the initially transmitted data and that is in the rated transmission interval following the receiving of the initially transmitted data, determining that the user equipment cannot identify the retransmitted data that belongs to the same HARQ process as the initially transmitted data and that is in the rated transmission interval following the receiving of the initially transmitted data.

In a second implementation manner of the first aspect the retransmission identification parameter is obtained by means of reporting by the user equipment in response to a requirement of a radio network controller, or the retransmission identification parameter is obtained by means of active reporting by the user equipment.

In a third implementation manner of the first aspect the retransmission identification parameter is carried in Iub interface signaling between the radio network controller and a base station, or the retransmission identification parameter is carried in a high speed downlink shared channel data frame.

In a fourth implementation manner of the first aspect the rated transmission interval is five transmission time intervals TTIs or seven TTIs.

In a second aspect a data transmission control apparatus configured and intended to perform any of the above methods is provided.

According to the data transmission control method and apparatus, and the base station that are provided in the embodiments of the present invention, after it is determined that user equipment can identify data that is retransmitted for several times in a short period of time, retransmitted data is sent, within a rated transmission interval after initial transmission, to the user equipment for at least once by using an HARQ process that is the same as an HARQ process in which initially transmitted data is located, so that the user equipment can obtain, in the short period of time, a combination gain generated during data demodulation, which greatly improves accuracy of receiving, by the user equipment, data sent by the base station; therefore, a relatively remote position covered by a cell can still quickly obtain information about the base station, thereby preventing, to some extent, a case of call drop caused by hard handover and further improving a cell capacity.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a flowchart of a data transmission control method according to an embodiment of the present invention;
FIG. 2 is a flowchart of another data transmission control method according to an embodiment of the present invention;
FIG. 3 is a flowchart of another data transmission control method according to an embodiment of the present invention;
FIG. 4 is a flowchart of another data transmission control method according to an embodiment of the present invention;
FIG. 5 is a flowchart of another data transmission control method according to an embodiment of the present invention;
FIG. 6 is a composition block diagram of a data transmission control apparatus according to an embodiment of the present invention;
FIG. 7 is a composition block diagram of another data transmission control apparatus according to an embodiment of the present invention; and
FIG 8 is a composition block diagram of a base station according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

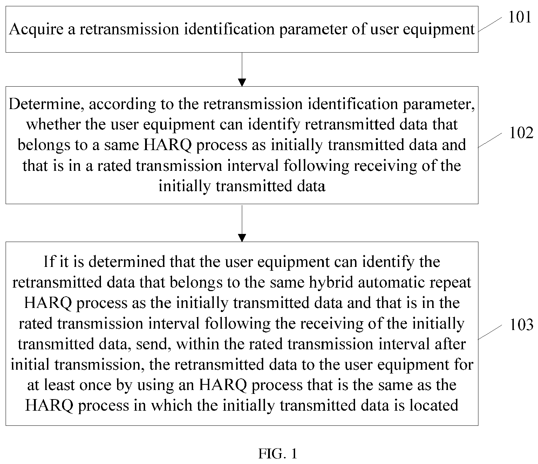

A data transmission control method provided in this embodiment of the present invention is applied to data transmission control in a mobile communications network, which mainly relates to retransmission information exchange between a base station and user equipment, and is preferably used in a scenario of SRB over HSDPA. In addition, it should be noted that a data retransmission manner provided in the technical solution of the present invention may be used in parallel with a data retransmission manner specified in an existing protocol standard, and the base station may select, by itself, one manner according to a need, so as to implement data retransmission. The method is mainly performed by a base station side, and a method procedure is shown in FIG. 1, which specifically includes the following steps:
101. Acquire a retransmission identification parameter of user equipment.

The retransmission identification parameter may include identification information of a retransmission identification capability of the user equipment or a device identifier of the user equipment, or may be feedback information indicating whether data sent by a base station can be received, where the identification information of the retransmission identification capability may be a field identifier, a field that can be used to carry a function description, or the like, and the device identifier refers to a device model, a device code, or the like.

102. Determine, according to the retransmission identification parameter, whether the user equipment can identify retransmitted data that belongs to a same HARQ process as initially transmitted data and that is in a rated transmission interval following receiving of the initially transmitted data.

The rated transmission interval in this embodiment of the present invention is set to five TTIs or seven TTIs, where the five TTIs may be applied to a WCDMA network standard, and the seven TTIs may be applied to an LTE network standard. Five TTIs or seven TTIs are an optional setting provided in this embodiment of the present invention, and the rated transmission interval may also be set to another quantity of TTIs according to an actual need. In another network standard, this parameter value may be set separately according to a need.

A specific identification method with reference to the identification information of the retransmission identification capability or the device identifier is described in detail in a subsequent part of the embodiments of the present invention.

103. If it is determined that the user equipment can identify the retransmitted data that belongs to the same hybrid automatic repeat HARQ process as the initially transmitted data and that is in the rated transmission interval following the receiving of the initially transmitted data, send, within the rated transmission interval after initial transmission, the retransmitted data to the user equipment for at least once by using an HARQ process that is the same as the HARQ process in which the initially transmitted data is located.

In this embodiment of the present invention, once the base station determines that the user equipment can support identification of data that is in the same HARQ process and that is continuously retransmitted in a short period of time, the base station can actively retransmit the data to the user equipment, and does not need to wait for any information feedback from the user equipment.

According to the data transmission control method provided in this embodiment of the present invention, after it is determined that user equipment can identify data that is retransmitted for several times in a short period of time, retransmitted data is sent, within a rated transmission interval after initial transmission, to the user equipment for at least once by using an HARQ process that is the same as an HARQ process in which initially transmitted data is located, so that the user equipment can obtain, in the short period of time, a combination gain generated during data demodulation, which greatly improves accuracy of receiving, by the user equipment, data sent by a base station; therefore, a relatively remote position covered by a cell can still quickly obtain information about the base station, thereby preventing, to some extent, a case of call drop caused by hard handover and further improving a cell capacity.

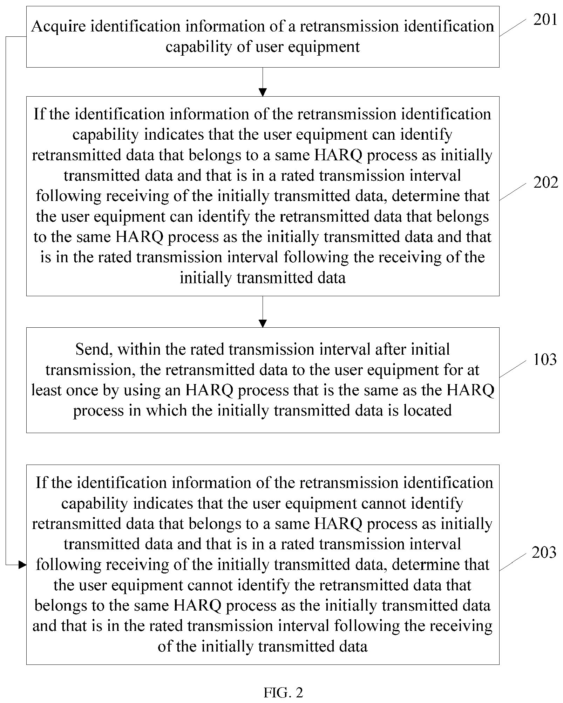

In a possible implementation manner of this embodiment of the present invention, for a case in which the retransmission identification parameter is identification information of a retransmission identification capability of user equipment, a method for determining the identification capability of the user equipment is provided; as shown in FIG. 2, the method includes the following steps:
201. Acquire identification information of a retransmission identification capability of user equipment.

The identification information of the retransmission identification capability is used to indicate whether the user equipment can identify retransmitted data that belongs to a same HARQ process as initially transmitted data and that is in a rated transmission interval following receiving of the initially transmitted data. Generally, the identification may be implemented by setting a flag bit on a specific field of a piece of specific transmission information or a specific transmission command; when the flag bit is 1, it indicates that the identification information of the retransmission identification capability indicates that the user equipment can identify the retransmitted data that belongs to the same HARQ process as the initially transmitted data and that is in the rated transmission interval following the receiving of the initially transmitted data; when the flag bit is 0, it indicates that the identification information of the retransmission identification capability indicates that the user equipment cannot identify the retransmitted data that belongs to the same HARQ process as the initially transmitted data and that is in the rated transmission interval following the receiving of the initially transmitted data. Certainly, meanings represented by 0 and 1 may also be exchanged.

202. If the identification information of the retransmission identification capability indicates that the user equipment can identify retransmitted data that belongs to a same HARQ process as initially transmitted data and that is in a rated transmission interval following receiving of the initially transmitted data, determine that the user equipment can identify the retransmitted data that belongs to the same HARQ process as the initially transmitted data and that is in the rated transmission interval following the receiving of the initially transmitted data.

203. If the identification information of the retransmission identification capability indicates that the user equipment cannot identify retransmitted data that belongs to a same HARQ process as initially transmitted data and that is in a rated transmission interval following receiving of the initially transmitted data, determine that the user equipment cannot identify the retransmitted data that belongs to the same HARQ process as the initially transmitted data and that is in the rated transmission interval following the receiving of the initially transmitted data.

The identification information of the retransmission identification capability may be acquired in the following way: a base station sends a request to the user equipment to request the user equipment to actively report the identification information of the retransmission identification capability; if the user equipment has the retransmission identification capability but does not report the identification information of the retransmission identification capability, or the user equipment cannot report the identification information of the retransmission identification capability due to lack of the retransmission identification capability, it may be considered that the identification information of the retransmission identification capability of the user equipment cannot be acquired.

In this implementation manner, a base station identifies a capability of user equipment by using identification information of a retransmission identification capability, which can improve accuracy of identifying the capability of the user equipment by the base station.

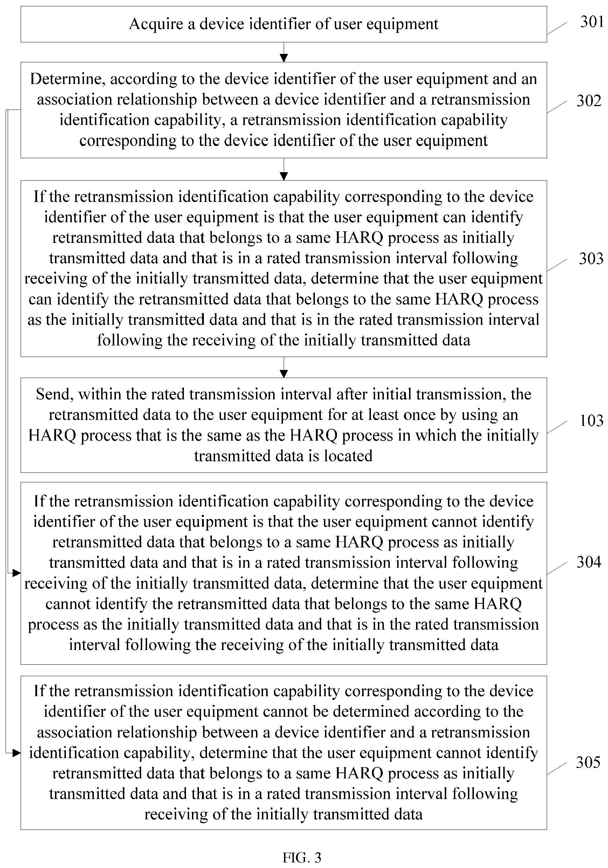

In another possible implementation manner of this embodiment of the present invention, in a case in which the retransmission identification parameter is a device identifier of user equipment, a method for determining a retransmission identification capability corresponding to the device identifier of the user equipment is provided; as shown in FIG. 3, the method includes the following steps:
301. Acquire a device identifier of user equipment.

302. Determine, according to the device identifier of the user equipment and an association relationship between a device identifier and a retransmission identification capability, a retransmission identification capability corresponding to the device identifier of the user equipment. According to different determining results, any one of steps 303 to 305 may be performed subsequently.

The association relationship between a device identifier and a retransmission identification capability may be preset, and a specific quantity of device identifiers and corresponding retransmission identification capabilities need to be acquired according to an actual need, so as to establish the association relationship, where the association relationship may be stored, in a list manner or the like, in a base station or a device (such as a radio network controller RNC) that can directly communicate with the base station, and an operation, such as updating, adding, or deleting, may be performed according to a need.

303. If the retransmission identification capability corresponding to the device identifier of the user equipment is that the user equipment can identify retransmitted data that belongs to a same HARQ process as initially transmitted data and that is in a rated transmission interval following receiving of the initially transmitted data, determine that the user equipment can identify the retransmitted data that belongs to the same HARQ process as the initially transmitted data and that is in the rated transmission interval following the receiving of the initially transmitted data.

304. If the retransmission identification capability corresponding to the device identifier of the user equipment is that the user equipment cannot identify retransmitted data that belongs to a same HARQ process as initially transmitted data and that is in a rated transmission interval following receiving of the initially transmitted data, determine that the user equipment cannot identify the retransmitted data that belongs to the same HARQ process as the initially transmitted data and that is in the rated transmission interval following the receiving of the initially transmitted data.

305. If the retransmission identification capability corresponding to the device identifier of the user equipment cannot be determined according to the association relationship between a device identifier and a retransmission identification capability, determine that the user equipment cannot identify retransmitted data that belongs to a same HARQ process as initially transmitted data and that is in a rated transmission interval following receiving of the initially transmitted data.

If the device identifier of the to-be-identified user equipment or the retransmission identification capability of the to-be-identified user equipment does not appear in the association relationship list, it may be considered that the retransmission identification capability corresponding to the device identifier of the user equipment cannot be determined.

In this implementation manner, because a device identifier of user equipment is provided to a base station side during network access and registration of the user equipment or in another procedure of exchange with a base station, if a retransmission identification capability of the user equipment can be directly determined according to the device identifier, the procedure of exchange with the user equipment can be omitted. Compared with the method shown in FIG. 2, this implementation manner is faster. However, whether an association relationship is updated in a timely manner determines accuracy of identifying the user equipment by the base station, and therefore this implementation manner has a relatively high requirement for time validity of the association relationship.

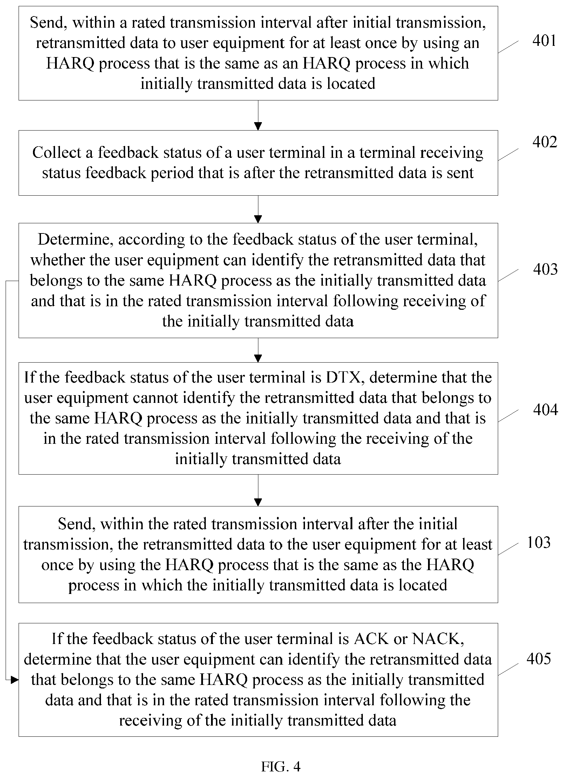

In another possible implementation manner of this embodiment of the present invention, in a case in which the retransmission identification parameter is a feedback status of a user terminal for actively retransmitted data, a method for determining a retransmission identification capability corresponding to a device identifier of user equipment is provided; as shown in FIG. 4, the method includes the following steps:
401. Send, within a rated transmission interval after initial transmission, retransmitted data to user equipment for at least once by using an HARQ process that is the same as an HARQ process in which initially transmitted data is located.

402. Collect a feedback status of a user terminal in a terminal receiving status feedback period that is after the retransmitted data is sent.

In this embodiment, the terminal receiving status feedback period that is after the retransmitted data is sent refers to a feedback period of a state, namely, the user terminal needs to feed back whether data actively retransmitted by a base station is received, and a function of the terminal receiving status feedback period that is after the retransmitted data is sent is similar to a function of a status feedback period that is after data is initially transmitted and that is specified in a standard protocol in the art.

403. Determine, according to the feedback status of the user terminal, whether the user equipment can identify the retransmitted data that belongs to the same HARQ process as the initially transmitted data and that is in the rated transmission interval following receiving of the initially transmitted data.

404. If the feedback status of the user terminal is DTX (Discontinuous Transmission, discontinuous transmission), determine that the user equipment cannot identify the retransmitted data that belongs to the same HARQ process as the initially transmitted data and that is in the rated transmission interval following the receiving of the initially transmitted data.

405. If the feedback status of the user terminal is a receiving success ACK or a receiving failure NACK, determine that the user equipment can identify the retransmitted data that belongs to the same HARQ process as the initially transmitted data and that is in the rated transmission interval following the receiving of the initially transmitted data.

In this embodiment, the feedback status of the user terminal relates to three types that include DTX, ACK, and NACK, where the DTX indicates that the user terminal does not send any information to the base station in the terminal receiving status feedback period that is after the retransmitted data is sent, which may indicate that the user terminal totally does not identify that the base station has actively retransmitted data; the ACK indicates that the user terminal successfully receives the data actively retransmitted by the base station, the NACK indicates that the user terminal detects the data actively retransmitted by the base station but fails to receive the data, and the two states of the ACK and the NACK indicate that the user terminal identifies the data actively retransmitted by the base station.

In this implementation manner, a base station tries to directly perform active retransmission on a user, and whether a user terminal has a capability to identify data actively retransmitted by the base station is determined according to a feedback result of the user terminal. Compared with the methods shown in FIG. 2 and FIG. 3, there are fewer changes on a network side and this implementation manner is easier to implement.

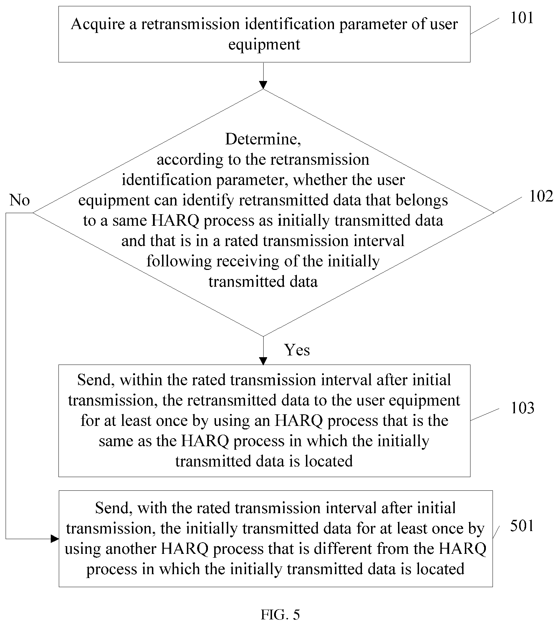

In another possible implementation manner of this embodiment of the present invention, for a case in which it is determined that the user equipment cannot identify the retransmitted data that belongs to the same HARQ process as the initially transmitted data and that is in the rated transmission interval following the receiving of the initially transmitted data, this embodiment may be implemented by using a method of providing a selective gain for the user equipment; as shown in FIG. 5, the method includes the following step:
501. Send, within the rated transmission interval after initial transmission, the initially transmitted data for at least once by using another HARQ process that is different from the HARQ process in which the initially transmitted data is located.

In this implementation manner, for user equipment that cannot identify retransmitted data that is in a same HARQ process, a technical means of transmitting same data by using different HARQ processes is selected and used. An HARQ combination gain is replaced with a selective combination gain, which improves, to some extent, accuracy of receiving, by the user equipment, data sent by a base station, so that a relatively remote position covered by a cell can still quickly obtain information about the base station, thereby preventing, to some extent, a case of call drop caused by hard handover and further improving a cell capacity.

With reference to the method procedure shown in FIG. 5, different retransmission times are further limited in this embodiment of the present invention, including:
in a case in which data is retransmitted for only once: if the initially transmitted data is sent, within the rated transmission interval after the initial transmission, for only once by using the another HARQ process that is different from the HARQ process in which the initially transmitted data is located, retransmitted data at this time is sent, within the rated transmission interval after the initial transmission, by using the another HARQ process that is different from the HARQ process in which the initially transmitted data is located; and
in a case in which the data is retransmitted for several times: if the initially transmitted data is sent, within the rated transmission interval after the initial transmission, for at least twice by using the another HARQ process that is different from the HARQ process in which the initially transmitted data is located, the initially retransmitted data is resent, within the rated transmission interval after the initial transmission, for the first time by using the another HARQ process that is different from the HARQ process in which the initially transmitted data is located, and the initially transmitted data is resent for the (N+1)^{th} time by using still another HARQ process that is different from the HARQ process in which the initially transmitted data is located and HARQ processes in which retransmitted data retransmitted for the first N times is located, where N is an integer greater than 1.

In this implementation manner, each time when retransmission is performed, different processes are used, to ensure that user equipment can receive data and perform identification on all the received data, which effectively improves a combination gain.

In addition, it should be noted that, in consideration of a case in which a signal receiving status of the user equipment is fine, active retransmission or actively repeated sending performed by a base station may cause waste of HSDPA air interface resources. Therefore, a network side needs to identify when a NodeB active retransmission technology scenario and a NodeB actively repeated sending scenario appear, so that a corresponding data sending mechanism is used subsequently for user equipment that is in these scenarios. Specifically, in a determining process, the network side may determine, according to a change in user channel quality, a data service type, whether user equipment is in a handover state, and the like, whether the user is in a scenario in which a NodeB active retransmission technology needs to be used and the NodeB actively repeated sending scenario.

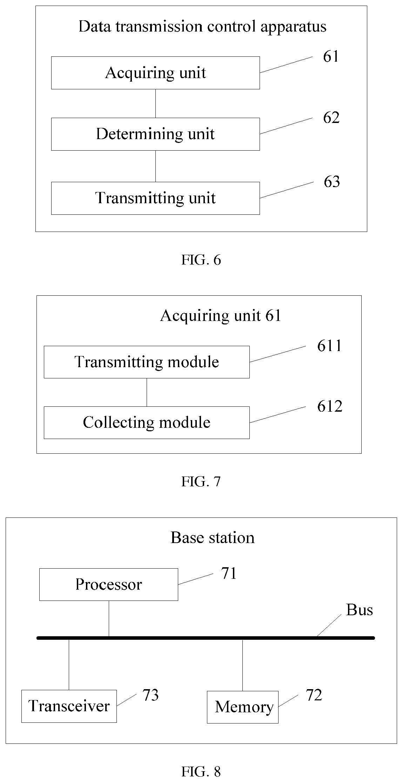

An embodiment of the present invention further provides a data transmission control apparatus, which may be used to implement method procedures shown in FIG. 1 to FIG. 5, and is mainly applied to a processor, a memory, and a transceiver that are of a base station, where except a communication module that is used for communication with user equipment or another network side device and that is integrated on the transceiver, and a memory function module that is integrated on the memory, all other function modules can be directly integrated on the processor. A structure of the apparatus is specifically shown in FIG. 6, and the apparatus includes:
an acquiring unit 61, configured to acquire a retransmission identification parameter of user equipment;
a determining unit 62, configured to determine, according to the retransmission identification parameter, whether the user equipment can identify retransmitted data that belongs to a same HARQ process as initially transmitted data and that is in a rated transmission interval following receiving of the initially transmitted data; and
a transmitting unit 63, configured to: when the user equipment can identify the retransmitted data that belongs to the same hybrid automatic repeat HARQ process as the initially transmitted data and that is in the rated transmission interval following the receiving of the initially transmitted data, send, within the rated transmission interval after initial transmission, the retransmitted data to the user equipment for at least once by using an HARQ process that is the same as the HARQ process in which the initially transmitted data is located.

Optionally, the acquiring unit 61 is specifically configured to: when the retransmission identification parameter is identification information of a retransmission identification capability, acquire identification information of a retransmission identification capability of the user equipment, where the identification information of the retransmission identification capability is used to indicate whether the user equipment can identify the retransmitted data that belongs to the same HARQ process as the initially transmitted data and that is in the rated transmission interval following the receiving of the initially transmitted data.

The determining unit 62 is specifically configured to: when the identification information of the retransmission identification capability indicates that the user equipment can identify the retransmitted data that belongs to the same HARQ process as the initially transmitted data and that is in the rated transmission interval following the receiving of the initially transmitted data, determine that the user equipment can identify the retransmitted data that belongs to the same HARQ process as the initially transmitted data and that is in the rated transmission interval following the receiving of the initially transmitted data; or when the identification information of the retransmission identification capability indicates that the user equipment cannot identify the retransmitted data that belongs to the same HARQ process as the initially transmitted data and that is in the rated transmission interval following the receiving of the initially transmitted data, determine that the user equipment cannot identify the retransmitted data that belongs to the same HARQ process as the initially transmitted data and that is in the rated transmission interval following the receiving of the initially transmitted data.

Optionally, the acquiring unit 61 is further specifically configured to acquire a device identifier of the user equipment.

The determining unit 62 is further specifically configured to: determine, according to the device identifier of the user equipment and an association relationship between a device identifier and a retransmission identification capability, a retransmission identification capability corresponding to the device identifier of the user equipment; and if the retransmission identification capability corresponding to the device identifier of the user equipment is that the user equipment can identify the retransmitted data that belongs to the same HARQ process as the initially transmitted data and that is in the rated transmission interval following the receiving of the initially transmitted data, determine that the user equipment can identify the retransmitted data that belongs to the same HARQ process as the initially transmitted data and that is in the rated transmission interval following the receiving of the initially transmitted data; if the retransmission identification capability corresponding to the device identifier of the user equipment is that the user equipment cannot identify the retransmitted data that belongs to the same HARQ process as the initially transmitted data and that is in the rated transmission interval following the receiving of the initially transmitted data, determine that the user equipment cannot identify the retransmitted data that belongs to the same HARQ process as the initially transmitted data and that is in the rated transmission interval following the receiving of the initially transmitted data; or if the retransmission identification capability corresponding to the device identifier of the user equipment cannot be determined according to the association relationship between a device identifier and a retransmission identification capability, determine that the user equipment cannot identify the retransmitted data that belongs to the same HARQ process as the initially transmitted data and that is in the rated transmission interval following the receiving of the initially transmitted data.

Optionally, as shown in FIG. 7, the acquiring unit 61 further includes a transmitting module 611 and a collecting module 612.

The transmitting module 611 is configured to send, within the rated transmission interval after the initial transmission, the retransmitted data to the user equipment for at least once by using the HARQ process that is the same as the HARQ process in which the initially transmitted data is located.

The collecting module 612 is configured to collect a feedback status of a user terminal in a terminal receiving status feedback period that is after the retransmitted data is sent.

The determining unit 62 is further configured to: determine, according to the feedback status of the user terminal, whether the user equipment can identify the retransmitted data that belongs to the same HARQ process as the initially transmitted data and that is in the rated transmission interval following the receiving of the initially transmitted data, where if the feedback status of the user terminal is discontinuous transmission DTX, the determining unit 62 determines that the user equipment cannot identify the retransmitted data that belongs to the same HARQ process as the initially transmitted data and that is in the rated transmission interval following the receiving of initially transmitted data; or if the feedback status of the user terminal is a receiving success ACK or a receiving failure NACK, the determining unit 62 determines that the user equipment can identify the retransmitted data that belongs to the same HARQ process as the initially transmitted data and that is in the rated transmission interval following the receiving of initially transmitted data.

Optionally, the transmitting unit 63 is further configured to: when it is determined that the user equipment cannot identify the retransmitted data that belongs to the same HARQ process as the initially transmitted data and that is in the rated transmission interval following the receiving of initially transmitted data, send, within the rated transmission interval after the initial transmission, the initially transmitted data for at least once by using another HARQ process that is different from the HARQ process in which the initially transmitted data is located. Optionally, the transmitting unit 63 is further specifically configured to: when the initially transmitted data is sent, within the rated transmission interval after the initial transmission, for only once by using the another HARQ process that is different from the HARQ process in which the initially transmitted data is located, send, within the rated transmission interval after the initial transmission, the initially transmitted data by using the another HARQ process that is different from the HARQ process in which the initially transmitted data is located; or when the initially transmitted data is sent, within the rated transmission interval after the initial transmission, for at least twice by using the another HARQ process that is different from the HARQ process in which the initially transmitted data is located, resend, within the rated transmission interval after the initial transmission, the initially transmitted data for the first time by using the another HARQ process that is different from the HARQ process in which the initially transmitted data is located, and resend the initially transmitted data for the (N+1)^{th} time by using still another HARQ process that is different from the HARQ process in which the initially transmitted data is located and HARQ processes in which retransmitted data retransmitted for the first N times is located, where N is an integer greater than 1.

Optionally, the rated transmission interval is five TTIs or seven TTIs.

After determining that user equipment can identify data that is retransmitted for several times in a short period of time, the data transmission control apparatus provided in this embodiment of the present invention sends, within a rated transmission interval after initial transmission, retransmitted data to the user equipment for at least once by using an HARQ process that is the same as an HARQ process in which initially transmitted data is located, so that the user equipment can obtain, in the short period of time, a combination gain generated during data demodulation, which greatly improves accuracy of receiving, by the user equipment, data sent by a base station; therefore, a relatively remote position covered by a cell can still quickly obtain information about the base station, thereby preventing, to some extent, a case of call drop caused by hard handover and further improving a cell capacity.

Optionally, the acquiring unit 61 is specifically configured to: when the retransmission identification parameter is information about a protocol version supported by the user equipment, acquire the information about the protocol version supported by the user equipment, where the information about the protocol version supported by the user equipment is used to indicate whether the user equipment can identify the retransmitted data that belongs to the same HARQ process as the initially transmitted data and that is in the rated transmission interval following the receiving of the initially transmitted data; the determining unit 62 is specifically configured to: if the information about the protocol version supported by the user equipment indicates that the user equipment supports an updated protocol version, determine that the user equipment can identify the retransmitted data that belongs to the same HARQ process as the initially transmitted data and that is in the rated transmission interval following the receiving of the initially transmitted data; or if the information about the protocol version supported by the user equipment indicates that the user equipment does not support an updated protocol version, determine that the user equipment can identify the retransmitted data that belongs to the same HARQ process as the initially transmitted data and that is in the rated transmission interval following the receiving of the initially transmitted data.

Optionally, the retransmission identification parameter is obtained by means of reporting by the user equipment in response to a requirement of a radio network controller, or the retransmission identification parameter is obtained by means of active reporting by the user equipment.

Optionally, the retransmission identification parameter is carried in Iub interface signaling between the radio network controller and a base station, or the retransmission identification parameter is carried in a high speed downlink shared channel data frame.

Optionally, if the identification information of the retransmission identification capability indicates that the user equipment can identify the retransmitted data that belongs to the same HARQ process as the initially transmitted data and that is in the rated transmission interval following the receiving of the initially transmitted data, the apparatus sends, within the rated transmission interval after the initial transmission, the retransmitted data to the user equipment for at least once by using the HARQ process that is the same as the HARQ process in which the initially transmitted data is located; or if the identification information of the retransmission identification capability indicates that the user equipment cannot identify the retransmitted data that belongs to the same HARQ process as the initially transmitted data and that is in the rated transmission interval following the receiving of the initially transmitted data, the apparatus sends, within the rated transmission interval after the initial transmission, the initially transmitted data for at least once by using the another HARQ process that is different from the HARQ process in which the initially transmitted data is located.

Optionally, the apparatus is the radio network controller, where the radio network controller carries indication information by using the high speed downlink shared channel data frame, and the indication information is used to indicate data that is retransmitted to the user equipment in the data frame.

An embodiment of the present invention provides a base station, a structure of the base station is shown in FIG. 8, and the base station includes a processor 71, a memory 72, and a transceiver 73, where the memory 72 stores at least a computer program; the processor 71 is configured to invoke the program stored in the memory to control the transceiver 73, and is configured to implement method procedures shown in FIG. 1 to FIG. 5; the processor 71, the memory 72, and the transceiver 73 perform communication by using a bus. In addition, in an implementation process of the present invention, the processor 71 may be one or more processors, and the memory may also be built in the processor. Certainly, the processor and the memory are not necessarily components that are obviously physically separated.

The processor 71 is configured to: acquire a retransmission identification parameter of user equipment, and determine, according to the retransmission identification parameter, whether the user equipment can identify retransmitted data that belongs to a same HARQ process as initially transmitted data and that is in a rated transmission interval following receiving of the initially transmitted data.

The transceiver 72 is configured to: when it is determined that the user equipment can identify the retransmitted data, send, within the rated transmission interval after initial transmission, the retransmitted data to the user equipment for at least once by using an HARQ process that is the same as the HARQ process in which the initially transmitted data is located.

Optionally, the processor 71 is further specifically configured to: when the retransmission identification parameter is identification information of a retransmission identification capability, acquire identification information of a retransmission identification capability of the user equipment, where the identification information of the retransmission identification capability is used to indicate whether the user equipment can identify the retransmitted data that belongs to the same HARQ process as the initially transmitted data and that is in the rated transmission interval following the receiving of the initially transmitted data; and if the identification information of the retransmission identification capability indicates that the user equipment can identify the retransmitted data that belongs to the same HARQ process as the initially transmitted data and that is in the rated transmission interval following the receiving of the initially transmitted data, determine that the user equipment can identify the retransmitted data that belongs to the same HARQ process as the initially transmitted data and that is in the rated transmission interval following the receiving of the initially transmitted data; or if the identification information of the retransmission identification capability indicates that the user equipment cannot identify the retransmitted data that belongs to the same HARQ process as the initially transmitted data and that is in the rated transmission interval following the receiving of the initially transmitted data, determine that the user equipment cannot identify the retransmitted data that belongs to the same HARQ process as the initially transmitted data and that is in the rated transmission interval following the receiving of the initially transmitted data.

Optionally, the processor 71 is further specifically configured to: when the retransmission identification parameter is a device identifier, acquire a device identifier of the user equipment; determine, according to the device identifier of the user equipment and an association relationship between a device identifier and a retransmission identification capability, a retransmission identification capability corresponding to the device identifier of the user equipment; and if the retransmission identification capability corresponding to the device identifier of the user equipment is that the user equipment can identify the retransmitted data that belongs to the same HARQ process as the initially transmitted data and that is in the rated transmission interval following the receiving of the initially transmitted data, determine that the user equipment can identify the retransmitted data that belongs to the same HARQ process as the initially transmitted data and that is in the rated transmission interval following the receiving of the initially transmitted data; if the retransmission identification capability corresponding to the device identifier of the user equipment is that the user equipment cannot identify the retransmitted data that belongs to the same HARQ process as the initially transmitted data and that is in the rated transmission interval following the receiving of the initially transmitted data, determine that the user equipment cannot identify the retransmitted data that belongs to the same HARQ process as the initially transmitted data and that is in the rated transmission interval following the receiving of the initially transmitted data; or if the retransmission identification capability corresponding to the device identifier of the user equipment cannot be determined according to the association relationship between a device identifier and a retransmission identification capability, determine that the user equipment cannot identify the retransmitted data that belongs to the same HARQ process as the initially transmitted data and that is in the rated transmission interval following the receiving of the initially transmitted data.

Optionally, the transceiver 73 is further configured to send, within the rated transmission interval after the initial transmission, the retransmitted data to the user equipment for at least once by using the HARQ process that is the same as the HARQ process in which the initially transmitted data is located.

The processor 71 is further configured to: collect a feedback status of a user terminal in a terminal receiving status feedback period that is after the retransmitted data is sent; and determine, according to the feedback status of the user terminal, whether the user equipment can identify the retransmitted data that belongs to the same HARQ process as the initially transmitted data and that is in the rated transmission interval following the receiving of the initially transmitted data, wherein if the feedback status of the user terminal is discontinuous transmission DTX, the processor 71 determines that the user equipment cannot identify the retransmitted data that belongs to the same HARQ process as the initially transmitted data and that is in the rated transmission interval following the receiving of initially transmitted data; or if the feedback status of the user terminal is a receiving success ACK or a receiving failure NACK, the processor 71 determines that the user equipment can identify the retransmitted data that belongs to the same HARQ process as the initially transmitted data and that is in the rated transmission interval following the receiving of initially transmitted data.

Optionally, the transceiver 73 is further specifically configured to: if it is determined that the user equipment cannot identify the retransmitted data that belongs to the same HARQ process as the initially transmitted data and that is in the rated transmission interval following the receiving of initially transmitted data, send, within the rated transmission interval after the initial transmission, the initially transmitted data for at least once by using another HARQ process that is different from the HARQ process in which the initially transmitted data is located. Optionally, the transceiver 73 is further specifically configured to: if the initially transmitted data is sent, within the rated transmission interval after the initial transmission, for only once by using the another HARQ process that is different from the HARQ process in which the initially transmitted data is located, send, within the rated transmission interval after the initial transmission, the initially transmitted data by using the another HARQ process that is different from the HARQ process in which the initially transmitted data is located; or if the initially transmitted data is sent, within the rated transmission interval after the initial transmission, for at least twice by using the another HARQ process that is different from the HARQ process in which the initially transmitted data is located, resend, within the rated transmission interval after the initial transmission, the initially transmitted data for the first time by using the another HARQ process that is different from the HARQ process in which the initially transmitted data is located, and resend the initially transmitted data for the (N+1)th time by using still another HARQ process that is different from the HARQ process in which the initially transmitted data is located and HARQ processes in which retransmitted data retransmitted for the first N times is located, where N is an integer greater than 1.

Optionally, the rated transmission interval is five TTIs or seven TTIs.

Optionally, the processor is further specifically configured to: when the retransmission identification parameter is information about a protocol version supported by the user equipment, acquire the information about the protocol version supported by the user equipment, where the information about the protocol version supported by the user equipment is used to indicate whether the user equipment can identify the retransmitted data that belongs to the same HARQ process as the initially transmitted data and that is in the rated transmission interval following the receiving of the initially transmitted data; and if the information about the protocol version supported by the user equipment indicates that the user equipment supports an updated protocol version, determine that the user equipment can identify the retransmitted data that belongs to the same HARQ process as the initially transmitted data and that is in the rated transmission interval following the receiving of the initially transmitted data; or if the information about the protocol version supported by the user equipment indicates that the user equipment does not support an updated protocol version, determine that the user equipment can identify the retransmitted data that belongs to the same HARQ process as the initially transmitted data and that is in the rated transmission interval following the receiving of the initially transmitted data.

Optionally, the processor is further specifically configured to learn, according to indication information carried by a radio network controller by using a high speed downlink shared channel data frame, data that needs to be retransmitted to the user equipment in the data frame.

After determining that user equipment can identify data that is retransmitted for several times in a short period of time, the base station provided in this embodiment of the present invention sends, within a rated transmission interval after initial transmission, retransmitted data to the user equipment for at least once by using an HARQ process that is the same as an HARQ process in which initially transmitted data is located, so that the user equipment can obtain, in the short period of time, a combination gain generated during data demodulation, which greatly improves accuracy of receiving, by the user equipment, data sent by the base station; therefore, a relatively remote position covered by a cell can still quickly obtain information about the base station, thereby preventing, to some extent, a case of call drop caused by hard handover and further improving a cell capacity. In the embodiments of the present invention, optionally, a process in which a network side acquires a retransmission identification parameter of user equipment or identification information of a retransmission identification capability of user equipment may be implemented in a manner in which a radio network controller (RNC) requests the user equipment to report the retransmission identification parameter or the identification information of the retransmission identification capability, for example, the radio network controller (RNC) determines, according to information that is about a protocol version supported by the user equipment and is actively reported by the user equipment, whether the user equipment can identify retransmitted data that belongs to a same HARQ process as initially transmitted data and that is in a rated transmission interval following receiving of the initially transmitted data, so as to determine whether the user equipment supports active retransmission. Specifically, for a terminal that supports an updated protocol version, it is determined that the terminal supports active retransmission; otherwise, it is determined that the terminal does not support active retransmission. Then, the RNC notifies a base station by using Iub interface signaling between the RNC and a NodeB, where the Iub interface signaling may include the retransmission identification parameter or the identification information of the retransmission identification capability that is used to indicate whether the user equipment supports an active retransmission technology, and the Iub interface signaling is used to instruct the base station to learn whether the user equipment supports the active retransmission technology; optionally, the RNC may also carry information about the retransmission identification capability of the user equipment in a high speed downlink shared channel (High-Speed Downlink Shared Channel, HS-DSCH) data frame, so that the base station learns whether the user equipment supports network side active retransmission, which is equivalent to that the base station obtains the retransmission identification parameter or the identification information of the retransmission identification capability.

The RNC may also send a request to the user equipment to request the user equipment to report a capability status indicating whether the user equipment supports active retransmission, for example, request the user equipment to report a status indicating whether a new protocol version is supported, so as to determine whether the user equipment can identify the retransmitted data that belongs to the same HARQ process as the initially transmitted data and that is in the rated transmission interval following the receiving of the initially transmitted data, and then the RNC may determine whether the user equipment supports active retransmission. Then the RNC notifies the base station by using the Iub interface signaling between the RNC and the base station, where the Iub interface signaling may include the retransmission identification parameter or the identification information of the retransmission identification capability that is used to indicate whether the user equipment supports the active retransmission technology, and the Iub interface signaling is used to instruct the base station to learn whether the user equipment supports the active retransmission technology; optionally, after receiving the capability status that indicates whether the user equipment supports retransmission and that is reported by the user equipment, for example, a status indicating whether the user equipment supports a protocol version, the RNC may also send the capability status to the base station by using the Iub interface signaling, and the base station determines the capability status indicating whether the user equipment supports retransmission. Specifically, for example, when it is determined whether the user equipment can identify the retransmitted data that belongs to the same HARQ process as the initially transmitted data and that is in the rated transmission interval following the receiving of the initially transmitted data, it is equivalent to that the base station obtains the retransmission identification parameter or the identification information of the retransmission identification capability of the user equipment.

If the user equipment has the retransmission identification capability but does not report the capability status, or the user equipment cannot report the capability status due to lack of the retransmission identification capability, it may be considered that the retransmission identification parameter or the identification information of the retransmission identification capability of the user equipment cannot be acquired.

A network device, such as a NodeB or an RNC, may independently or collaboratively control whether to send data to user equipment by using an active retransmission technology or an actively repeated sending technology. Data retransmission controlled by the RNC (by using the active retransmission technology or the actively repeated sending technology) may include:
carrying, by the RNC, indication information by using the high speed downlink shared channel (High-Speed Downlink Shared Channel, HS-DSCH) data frame, where the indication information is used to indicate data that is in the data frame and that specifically needs to be sent to the user equipment by using the active retransmission technology or the actively repeated sending technology.

In the foregoing embodiments of the present invention:
that retransmitted data is sent, within a rated transmission interval after initial transmission, to user equipment for at least once by using an HARQ process that is the same as an HARQ process in which initially transmitted data is located may be referred to as an active retransmission technology, and that the initially transmitted data is sent, within the rated transmission interval after the initial transmission, for at least once by using another HARQ process that is different from the HARQ process in which initially transmitted data is located may be referred to as an actively repeated sending technology.

In the foregoing embodiments of the present invention, identification information of a retransmission identification capability may be a type of retransmission identification parameter. Based on the foregoing descriptions of the implementation manners, a person skilled in the art may clearly understand that the present invention may be implemented by software in addition to necessary universal hardware or by hardware only. In most circumstances, the former is a preferred implementation manner. Based on such an understanding, the technical solutions of the present invention essentially or the part contributing to the prior art may be implemented in a form of a software product. The computer software product is stored in a readable storage medium, such as a floppy disk, a hard disk or an optical disc of a computer, and includes several instructions for instructing a computer device (which may be a personal computer, a server, or a network device) to perform the methods described in the embodiments of the present invention.

## Claims

1. A data transmission control method performed by a data transmission control apparatus, the method comprising:
**a.)** acquiring (step 101) a retransmission identification parameter of a user equipment;
**b.)** determining (step 102), according to the retransmission identification parameter, whether the user equipment can identify retransmitted data that belongs to a same hybrid automatic repeat request, HARQ, process as initially transmitted data and that is in a rated transmission interval following receiving of the initially transmitted data; and
**c.)** if yes in step **b.),** sending within the rated transmission interval after the initial transmission, the retransmitted data to the user equipment for at least once by using the HARQ process that is the same as the HARQ process in which the initially transmitted data is located (step 103);
**d.)** if no in step **b.),** sending within the rated transmission interval after the initial transmission, the initially transmitted data for at least once by using another HARQ process that is different from the HARQ process in which the initially transmitted data is located (step 501).

2. The method according to claim 1, wherein the retransmission identification parameter is identification information of a retransmission identification capability, the acquiring the retransmission identification parameter of user equipment comprises:
acquiring identification information of the retransmission identification capability of the user equipment, wherein the identification information of the retransmission identification capability is used to indicate whether the user equipment can identify the retransmitted data that belongs to the same HARQ process as the initially transmitted data and that is in the rated transmission interval following the receiving of the initially transmitted data; and
the determining, according to the retransmission identification parameter, whether the user equipment can identify retransmitted data that belongs to the same HARQ process as initially transmitted data and that is in the rated transmission interval following receiving of the initially transmitted data comprises:
if the identification information of the retransmission identification capability indicates that the user equipment can identify the retransmitted data that belongs to the same HARQ process as the initially transmitted data and that is in the rated transmission interval following the receiving of the initially transmitted data, determining that the user equipment can identify the retransmitted data that belongs to the same HARQ process as the initially transmitted data and that is in the rated transmission interval following the receiving of the initially transmitted data; or
if the identification information of the retransmission identification capability indicates that the user equipment cannot identify the retransmitted data that belongs to the same HARQ process as the initially transmitted data and that is in the rated transmission interval following the receiving of the initially transmitted data, determining that the user equipment cannot identify the retransmitted data that belongs to the same HARQ process as the initially transmitted data and that is in the rated transmission interval following the receiving of the initially transmitted data.

3. The method according to claim 1 or 2, wherein:
the retransmission identification parameter is obtained by means of reporting by the user equipment in response to a requirement of a radio network controller, or the retransmission identification parameter is obtained by means of active reporting by the user equipment.

4. The method according to any one of claims 1 to 3, wherein:
the retransmission identification parameter is carried in Iub interface signaling between the radio network controller and a base station, or the retransmission identification parameter is carried in a high speed downlink shared channel data frame.

5. The method according to claim 1 or 2, wherein the rated transmission interval is five transmission time intervals, TTIs, or seven TTIs.

6. A data transmission control apparatus configured and intended to perform all the steps of any of the methods according to claims 1 - 5.

## Patentansprüche

1. Datenübertragungssteuerverfahren, das von einer Datenübertragungssteuervorrichtung durchgeführt wird, wobei das Verfahren umfasst:
a.) Erfassen (Schritt 101) eines Wiederübertragungsidentifikationsparameters eines Endgeräts;
b.) Ermitteln (Schritt 102) in Übereinstimmung mit dem Wiederübertragungsidentifikationsparameter, ob das Endgerät erneut übertragene Daten identifizieren kann, die zu einem gleichen automatischen Hybrid-Wiederholungsanforderungs-Prozess, HARQ-Prozess, gehören wie anfänglich übertragene Daten und die sich in einem Nennübertragungsintervall nach Empfang der anfänglich übertragenen Daten befinden; und
c.) falls ja in Schritt b.), zumindest einmaliges Senden der erneut übertragenen Daten innerhalb des Nennübertragungsintervalls nach der anfänglichen Übertragung an das Endgerät unter Verwendung des HARQ-Prozesses, der der gleiche wie der HARQ-Prozess ist, in dem sich die anfänglich übertragenen Daten befinden (Schritt 103);
d.) falls nein in Schritt b.), zumindest einmaliges Senden der anfänglich übertragenen Daten innerhalb des Nennübertragungsintervalls nach der anfänglichen Übertragung an das Endgerät unter Verwendung eines HARQ-Prozesses, der von dem HARQ-Prozess verschieden ist, in dem sich die anfänglich übertragenen Daten befinden (Schritt 501).

2. Verfahren nach Anspruch 1, wobei der Wiederübertragungsidentifikationsparameter Identifikationsinformationen einer Wiederübertragungsidentifikationsfähigkeit ist, wobei das Erfassen des Wiederübertragungsidentifikationsparameters des Endgeräts umfasst:
Erfassen von Identifikationsinformationen der Wiederübertragungsidentifikationsfähigkeit des Endgeräts, wobei die Identifikationsinformationen der Wiederübertragungsidentifikationsfähigkeit verwendet werden, um anzuzeigen, ob das Endgerät die erneut übertragenen Daten identifizieren kann, die zum gleichen HARQ-Prozess gehören wie die anfänglich übertragenen Daten und die sich im Nennübertragungsintervall nach dem Empfangen der anfänglich übertragenen Daten befinden; und
das Ermitteln in Übereinstimmung mit dem Wiederübertragungsidentifikationsparameter, ob das Endgerät erneut übertragene Daten identifizieren kann, die zu dem gleichen HARQ-Prozess gehören wie anfänglich übertragene Daten und die sich in dem Nennübertragungsintervall nach Empfang der anfänglich übertragenen Daten befinden, umfasst:
falls die Identifikationsinformationen der Wiederübertragungsidentifikationsfähigkeit anzeigen, dass das Endgerät die erneut übertragenen Daten identifizieren kann, die zu dem gleichen HARQ-Prozess gehören wie die anfänglich übertragenen Daten und die sich in dem Nennübertragungsintervall nach Empfang der anfänglich übertragenen Daten befinden, Ermitteln, dass das Endgerät die erneut übertragenen Daten identifizieren kann, die zu dem gleichen HARQ-Prozess gehören wie die anfänglich übertragenen Daten und die sich in dem Nennübertragungsintervall nach Empfang der anfänglich übertragenen Daten befinden; oder
falls die Identifikationsinformationen der Wiederübertragungsidentifikationsfähigkeit anzeigen, dass das Endgerät die erneut übertragenen Daten nicht identifizieren kann, die zu dem gleichen HARQ-Prozess gehören wie die anfänglich übertragenen Daten und die sich in dem Nennübertragungsintervall nach Empfang der anfänglich übertragenen Daten befinden, Ermitteln, dass das Endgerät die erneut übertragenen Daten nicht identifizieren kann, die zu dem gleichen HARQ-Prozess gehören wie die anfänglich übertragenen Daten und die sich in dem Nennübertragungsintervall nach Empfang der anfänglich übertragenen Daten befinden.

3. Verfahren nach Anspruch 1 oder 2, wobei:
der Wiederübertragungsidentifikationsparameter mithilfe einer Meldung durch das Endgerät als Reaktion auf eine Anforderung einer Funknetzsteuerung erhalten wird oder der Wiederübertragungsidentifikationsparameter mithilfe einer aktiven Meldung durch das Endgerät erhalten wird.

4. Verfahren nach einem der Ansprüche 1 bis 3, wobei:
der Wiederübertragungsidentifikationsparameter in einer Iub-Schnittstellensignalgebung zwischen der Funknetzsteuerung und einer Basisstation getragen wird oder der Wiederübertragungsidentifikationsparameter in einem gemeinsam genutzten Hochgeschwindigkeits-Abwärtsstreckenkanal-Datenrahmen getragen wird.

5. Verfahren nach Anspruch 1 oder 2, wobei das Nennübertragungsintervall fünf Übertragungszeitintervalle, TTIs, oder sieben TTIs beträgt.

6. Datenübertragungssteuervorrichtung, die ausgelegt ist und vorgesehen ist, alle die Schritte nach einem der Verfahren nach den Ansprüchen 1-5 durchzuführen.

## Revendications

1. Procédé de contrôle de transmission de données exécuté par un appareil de contrôle de transmission de données, le procédé comprenant les étapes consistant à :
a) acquérir (étape 101) un paramètre d'identification de retransmission d'un équipement d'utilisateur ;
b.) déterminer (étape 102), en fonction du paramètre d'identification de retransmission, si l'équipement d'utilisateur peut identifier des données retransmises appartenant à un même processus de demande de répétition automatique hybride, HARQ (hybrid automatic repeat request), que les données initialement transmises et qui se situe dans un intervalle de transmission nominal suivant la réception des données initialement transmises ; et
c.) si la réponse est oui à l'étape b.), envoyer dans l'intervalle de transmission nominal après la transmission initiale, des données retransmises à l'équipement d'utilisateur au moins une fois en utilisant le processus HARQ identique au processus HARQ dans lequel les données initialement transmises sont situées (étape 103) ;
d.) si la réponse est non à l'étape b.), envoyer dans l'intervalle de transmission nominal après la transmission initiale, des données initialement transmises au moins une fois en utilisant un autre processus HARQ différent du processus HARQ dans lequel se trouvent les données initialement transmises (étape 501).

2. Procédé selon la revendication 1, dans lequel le paramètre d'identification de retransmission est une information d'identification d'une capacité d'identification de retransmission, l'acquisition du paramètre d'identification de retransmission d'un équipement d'utilisateur comprend l'étape consistant à :
acquérir des informations d'identification de la capacité d'identification de retransmission de l'équipement d'utilisateur, dans lequel les informations d'identification de la capacité d'identification de retransmission sont utilisées pour indiquer si l'équipement d'utilisateur peut identifier les données retransmises appartenant au même processus HARQ que les données initialement transmises et se trouvant dans l'intervalle de transmission nominal suivant la réception des données initialement transmises ; et
la détermination, en fonction du paramètre d'identification de retransmission, du fait que l'équipement d'utilisateur puisse ou non identifier des données retransmises appartenant au même processus HARQ que les données initialement transmises et qui se situe dans l'intervalle de transmission nominal suivant la réception des données initialement transmises comprend les étapes consistant à :
si les informations d'identification de la capacité d'identification de retransmission indiquent que l'équipement d'utilisateur peut identifier les données retransmises appartenant au même processus HARQ que les données initialement transmises et se trouvant dans l'intervalle de transmission nominal suivant la réception des données initialement transmises, déterminer que l'équipement d'utilisateur peut identifier les données retransmises appartenant au même processus HARQ que les données initialement transmises et se trouvant dans l'intervalle de transmission nominal suivant la réception des données initialement transmises ; ou
si les informations d'identification de la capacité d'identification de retransmission indiquent que l'équipement d'utilisateur ne peut pas identifier les données retransmises appartenant au même processus HARQ que les données initialement transmises et se trouvant dans l'intervalle de transmission nominal suivant la réception des données initialement transmises, déterminer que l'équipement d'utilisateur ne peut pas identifier les données retransmises appartenant au même processus HARQ que les données initialement transmises et se trouvant dans l'intervalle de transmission nominal suivant la réception des données initialement transmises.

3. Procédé selon les revendications 1 ou 2, dans lequel :
le paramètre d'identification de retransmission est obtenu au moyen d'un compte-rendu établi par l'équipement d'utilisateur en réponse à une exigence d'un dispositif de contrôle de réseau radio, ou le paramètre d'identification de retransmission est obtenu au moyen d'un compte-rendu actif par l'équipement utilisateur.

4. Procédé selon l'une quelconque des revendications 1 à 3, dans lequel :
le paramètre d'identification de retransmission est acheminé dans la signalisation d'interface Iub entre le dispositif de contrôle de réseau radio et une station de base, ou le paramètre d'identification de retransmission est acheminé dans une trame de données de canal partagé d'une liaison descendante à grande vitesse.

5. Procédé selon les revendications 1 ou 2, dans lequel l'intervalle de transmission nominal est de cinq intervalles de temps de transmission, TTI ou de sept TTI.

6. Appareil de contrôle de transmission de données configuré pour et destiné à exécuter toutes les étapes de l'un quelconque des procédés selon les revendications 1 à 5.
